# EUROPÄISCHE PATENTANMELDUNG

(11) **EP 1 231 783 A1**
(43) Veröffentlichungstag der Anmeldung: **14.08.2002**
(21) Anmeldenummer: 02002420.4
(22) Anmeldetag: 01.02.2002
(51) Int. Cl.: H04N 5/74

(54) **Vorrichtung zur audiovisuellen Präsentation**

(30) Priorität: 07.02.2001 DE 10105481
(71) Anmelder: DDC Design & Development GmbH & Co. KG, 90431 Nürnberg (DE)
(72) Erfinder: Leipold, Frank, 90431 Nürnberg (DE)
(74) Vertreter: Thielking, Bodo, Dipl.-Ing.

(57) **Zusammenfassung**

Eine Vorrichtung zur audiovisuellen Präsentation weist eine Rollbildwand (2) und einen Rollbildwandhalter, Audiogeräte (3) und Lautsprecher (4) auf. Der Rollbildwandhalter ist als Koffer (1) ausgebildet, der zwei um eine Klappachse klappbar aneinander angelenkte Kofferteile (1a; 1b) aufweist und im zusammengeklappten Zustand die Rollbildwand (2) mit ihrer Wickelachse (2a) in paralleler Ausrichtung zur Klappachse aufnimmt, sowie sämtliche Audiogeräte (3) und Lautsprecher (4) enthält.

## Beschreibung

Die Erfindung betrifft eine Vorrichtung nach dem Oberbegriff des Patentanspruchs 1.

Es sind transportierbare Vorrichtungen zur audiovisuellen Präsentation bekannt, bei denen die Vorführgeräte und deren Zubehör in einem entsprechend ausgestalteten Koffer untergebracht sind. Derartige Koffer enthalten zumindest keine Rollbildwand. Diese wird separat in ihrem Wickelgehäuse mitgeführt, das einen abklappbaren Ständer und ein ausziehbares Rollbildwand-Halteelement umfaßt. Die Länge des Wikkelgehäuses bestimmt die Breite des zu projizierbaren Bildes. Die Wickelgehäuse sind daher sperrig und lassen sich nur mit Schwierigkeit zusätzlich zu einem Koffer transportieren.

Ausgehend von diesem Stand der Technik liegt der Erfindung die Aufgabe zugrunde, eine Vorrichtung der als bekannt vorausgesetzten Art so auszubilden, daß sie einen einfachen Transport aller Bestandteile in einem gemeinsamen, möglichst klein bauenden, tragbaren Behälter ermöglicht.

Die Lösung dieser Aufgabe erfolgt mit den Merkmalen des Patentanspruchs 1.

Bevorzugte Ausgestaltungen der Erfindung ergeben sich aus den Unteransprüchen.

Die Auszugslänge der Rollbildwand ist nahezu unbegrenzt. Es können deshalb beliebig breite Bildformate auf die Rollbildwand projiziert werden. Ein Koffer ist standfest und kann daher an jedem, für Präsentationen geeigneten Ort leicht aufgestellt werden. Die Aufstellung ist schnell und einfach möglich. Die Geräte können in dem Koffer fest installiert sein, so daß lediglich eine einzige Stromzuführung nötig ist.

In einer bevorzugten Ausgestaltung der Erfindung kann die Projektionsfläche an unterschiedliche Bildformate leicht angepaßt werden. Insbesondere ist die Vergrößerung der Bildfläche auf bei modernen Kommunikationsmitteln übliche Bildformate von 4:3 oder 16:9 leicht möglich.

Nachstehend wird eine bevorzugte Ausführungsform der Erfindung anhand der Zeichnungen im einzelnen beschrieben. Es zeigen:
- Figur 1 -: eine Draufsicht auf einen geschlossenen Koffer;
- Figur 1a -: die Draufsicht auf den aufgeklappten Koffer nach Fig. 1 mit ausgeklapptem Halteelement;
- Figur 1b -: die Draufsicht auf den Koffer nach Fig. 1 mit gestreckt ausgerichtetem Kofferdeckel und Halteelement;
- Figur 1c -: die Draufsicht auf den Koffer gemäß Fig. 1b mit zusätzlichem Halteelement;
- Figur 2 -: eine Frontansicht des aufgeklappten Koffers gemäß Fig. 1b;
- Figur 3 -: eine Frontansicht des aufgeklappten Koffers mit aufgespannter Rollbildwand;
- Figur 4 -: eine Seitenansicht des Koffers nach Fig. 3.

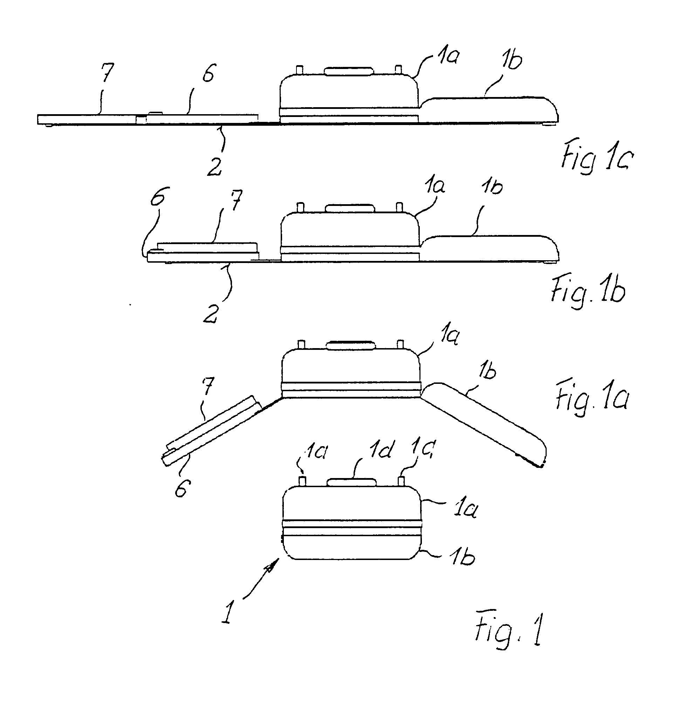

Ein in Fig. 1 geschlossen dargestellter Koffer 1 weist zwei um eine Klappachse verschwenkbar miteinander verbundene Kofferteile 1a und 1b auf. Der Koffer 1 ist als Hartschale in der üblichen Weise mit Scharnieren und Verschlüssen ausgeführt, die deshalb hier nicht dargestellt sind. Er besitzt zum Transport an seiner Rückseite Transportrollen 1c sowie einen ausziehbaren Transportgriff 1d.

Aus dem Kofferteil 1a können miteinander verbundene Halteelemente 6 und 7 um eine zur Klappachse parallele Achse ausgeklappt werden, wenn das Kofferteil 1b vom Kofferteil 1a weggeschwenkt ist, wie Fig. 1a zeigt. Der Koffer 1 hat sowohl im geschlossenen als auch im geöffneten Zustand eine eben Aufstandsfläche, so daß er unabhängig vom Klappwinkel des Kofferteils 1b und des Halteelements 6 gegenüber dem Kofferteil 1a sicher steht. Daher läßt sich eine Rollbildwand 2 bei jedem Öffnungswinkel bis zu der in Fig. 1b gestreckten Anordnung von Kofferteil 1b und Halteelement 6 zwischen deren freien vertikalen Seitenrändern aufspannen.

Eine demgegenüber nochmals verlängerte Rollbildwand 2 kann durch zusätzliches Ausklappen des Halteelements 7 um eine zweite zur Klappachse parallele Achse erreicht werden. Das Halteelement 7 ist frei schwenkbar an dem Halteelement 6 gelagert.

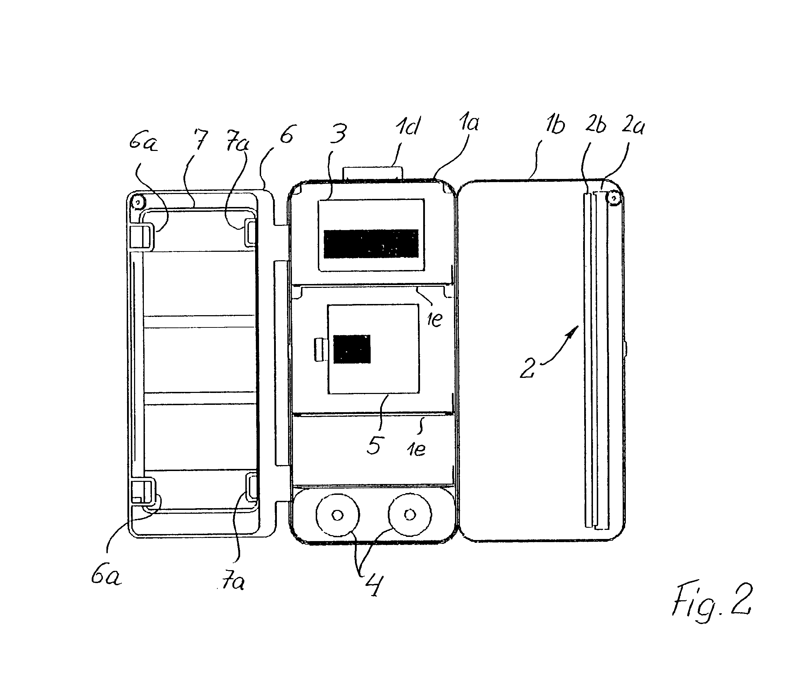

Die aufgerollte Rollbildwand 2 ist im Kofferteil 1b benachbart zu seinem freien vertikalen Außenrand angeordnet und um eine parallel dazu verlaufende Wickelachse 2a ausziehbar, wie Fig. 2 zeigt. In dem Kofferteil 1a sind durch Böden 1e unterteilte Staufächer geschaffen, in denen ein Audiogerät 3 und ein Projektionsvorrichtung 5 untergebracht, sowie Lautsprecher 4 fest installiert sind. Die Halteelemente 6 und 7 weisen Befestigungsösen 6a und 7a auf, in die das Auszugsende 2b der Rollbildwand 2 eingehängt werden kann. Die Halteelemente 6 und 7 sind rahmenförmig ausgebildet. Der Rahmen des Halteelements 7 paßt in den Rahmen des Halteelements 6. Dadurch beanspruchen die Halteelemente 6 und 7 im eingeklappten Zustand nur eine geringe Kofferraumtiefe.

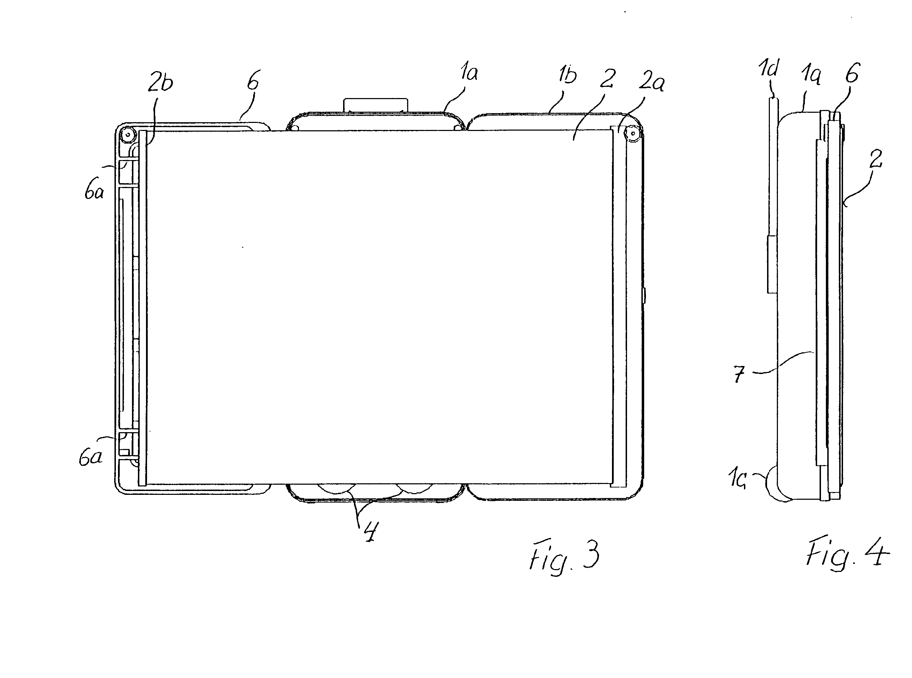

In Fig. 3 ist für eine mit Fig. 1b korrespondierende Anordnung der Kofferteile 1a und 1b die ausgezogene und in die Befestigungsösen 6a eingehängte Rollbildwand 2 mit ihrer Projektionsfläche erkennbar. Die Staufächer werden von der Rollbildwand 2 verdeckt, so daß sich ein guter optischer Gesamteindruck ergibt.

Die kleinste Projektionsfläche ergibt sich, wenn bei in das Kofferteil 1a eingeklappten Halteelementen 6 und 7 die Rollbildwand 2 in die dann außen liegenden Befestigungsösen 7a eingehängt werden. Ein gebräuchliches Bildformat mit Seitenkanten im Verhältnis 4:3 steht bei ausgeklapptem Halteelement 6 und daran befestigtem Auszugsende 2b zur Verfügung. Schließlich kann ein Bildformat von 16:9 erreicht werden, wenn das zusätzliche Halteelement 7 ausgeklappt wird. Es sind jedoch auch alle Zwischengrößen realisierbar, wenn die Rollbildwand 2 zwischen zum Kofferteil 1a geneigten Halteelementen 6 bzw. 7 und geneigten Kofferteil 1b aufgespannt wird.

## Patentansprüche

1. Vorrichtung zur audiovisuellen Präsentation, mit einer Rollbildwand (2) und einem Rollbildwandhalter, mit Audiogeräten (3) und Lautsprechern (4);
**dadurch gekennzeichnet,**
**daß** der Rollbildwandhalter ein Koffer (1) ist, der zwei um eine Klappachse klappbar aneinander angelenkte Kofferteile (1a; 1b) aufweist und im zusammengeklappten Zustand die Rollbildwand (2) mit ihrer Wickelachse (2a) in paralleler Ausrichtung zur Klappachse aufnimmt, sowie sämtliche Audiogeräte (3) und Lautsprecher (4) enthält.

2. Vorrichtung zur audiovisuellen Präsentation nach Anspruch 1,
**dadurch gekennzeichnet,**
**daß** der Koffer (1) auch eine Projektionsvorrichtung (5) enthält.

3. Vorrichtung zur audiovisuellen Präsentation nach Anspruch 1 oder 2,
**dadurch gekennzeichnet,**
**daß** die Lautsprecher (4) in einem Kofferteil (1a) fest installiert sind.

4. Vorrichtung zur audiovisuellen Präsentation nach einem oder mehreren der Ansprüche 1 bis 3,
**dadurch gekennzeichnet,**
**daß** die Audiogeräte (3) in einem Kofferteil (1a) fest installiert sind.

5. Vorrichtung zur audiovisuellen Präsentation nach einem oder mehreren der Ansprüche 1 bis 4,
**dadurch gekennzeichnet,**
**daß** die Rollbildwand (2) mit ihrer Wickelachse (2a) an einem Kofferteil (1b) gelagert ist.

6. Vorrichtung zur audiovisuellen Präsentation nach Anspruch 5,
**dadurch gekennzeichnet,**
**daß** die Rollbildwand (2) mit ihrem Auszugsende (2b) am anderen Kofferteil (1a) befestigbar ist.

7. Vorrichtung zur audiovisuellen Präsentation nach einem oder mehreren der Ansprüche 1 bis 5,
**dadurch gekennzeichnet,**
**daß** an mindestens einem Kofferteil (1a) ein um eine zur Klappachse parallele Achse ausklappbares Halteelement (6; 7) für ein Auszugsende (2b) der Rollbildwand (2) vorgesehen ist.

8. Vorrichtung zur audiovisuellen Präsentation nach einem oder mehreren der Ansprüche 1 bis 5,
**dadurch gekennzeichnet,**
**daß** an beiden Kofferteilen (1a; 1b) um zur Klappachse parallele Achsen ausklappbar angelenkte Halteelemente vorgesehen sind, an deren im aufgeklappten Zustand jeweils am weitesten voneinander entfernten Bereichen die Wickelachse (2a) und das Auszugsende (2b) der Rollbildwand (2) befestigbar sind.

9. Vorrichtung zur audiovisuellen Präsentation nach einem oder mehreren der Ansprüche 1 bis 8,
**dadurch gekennzeichnet,**
**daß** an einem um eine parallel zur Klappachse verlaufende Achse ausklappbar angelenkten Halteelement (6) ein weiteres, ebenfalls um eine parallel zur Klappachse verlaufende Achse ausklappbares Halteelement (7) angelenkt ist.

10. Vorrichtung zur audiovisuellen Präsentation nach einem oder mehreren der Ansprüche 1 bis 9,
**dadurch gekennzeichnet,**
**daß** die Halteelemente (6; 7) rahmenartig ausgebildet sind.

11. Vorrichtung zur audiovisuellen Präsentation nach einem oder mehreren der Ansprüche 1 bis 10,
**dadurch gekennzeichnet,**
**daß** in einem Kofferteil (1a) die Lautsprecher und im anderen Kofferteil (1b) die Wickelachse (2a) angeordnet ist.

12. Vorrichtung zur audiovisuellen Präsentation nach einem oder mehreren der Ansprüche 1 bis 11,
**dadurch gekennzeichnet,**
**daß** ein Kofferteil (1a) Staufächer für Projektionsvorrichtungen (5) und Audiogeräte (3) enthält.
